# FASCICULE DE BREVET EUROPEEN

(11) **EP 1 385 740 B1**
(45) Date de publication et mention de la délivrance du brevet: **10.11.2004**
(21) Numéro de dépôt: 02720077.3
(22) Date de dépôt: 25.03.2002
(51) Int. Cl.: B64G 1/44, H01L 31/045, H01L 31/052

(54) **STRUCTURE DE GENERATEUR SOLAIRE POUR SATELLITE COMPRENANT DES CALAGES ENTRE PANNEAUX**
SOLARGENERATORKONSTRUKTION FÜR SATELLITEN MIT VERSTREBUNGSELEMENTEN ZWISCHEN PANEELEN
SATELLITE SOLAR GENERATOR STRUCTURE COMPRISING BRACING ELEMENTS BETWEEN PANELS

(30) Priorité: 29.03.2001 FR 0104251
(43) Date de publication de la demande: 04.02.2004
(73) Titulaire: ALCATEL, 75008 Paris (FR)
(72) Inventeur: GEYER, Freddy, F-06150 Cannes (FR); VIALE, Daniel, F-83440 Tanneron (FR)
(74) Mandataire: Smith, Bradford Lee
(86) Numéro de dépôt international: PCT/FR2002/001029
(87) Numéro de publication internationale: WO 2002/079034

(56) Documents cités:
- EP-A- 0 754 625
- EP-A- 0 977 273
- DE-A- 3 215 432
- JP-A- 58 214 500
- US-A- 4 779 826
- US-B1- 6 168 116
- US-B1- 6 177 627
- PATENT ABSTRACTS OF JAPAN vol. 1998, no. 11, 30 septembre 1998 (1998-09-30) & JP 10 147298 A (MITSUBISHI ELECTRIC CORP), 2 juin 1998 (1998-06-02)

## Description

L'invention concerne une structure de générateur solaire de satellite comprenant plusieurs panneaux solaires ayant chacun une surface plane, lesdits panneaux étant disposés en superposition dans ladite structure, ladite structure comprenant au moins une tige maintenant lesdits panneaux comprimés les uns aux autres, deux panneaux successifs étant en contact par l'intermédiaire d'appuis disposés en périphérie desdits panneaux.

L'invention se rapporte aux structures de générateurs solaires destinées à supporter des panneaux photovoltaïques en superposition pendant une phase de lancement du satellite, puis à déployer ces panneaux pour former un générateur ayant par exemple tous ses panneaux positionnés dans un même plan. La nécessité d'augmentation de puissance de tels générateurs conduit par exemple à utiliser des cellules photovoltaïques à rendement élevé qui sont implantées sur des panneaux agencés dans une structure classique, ce qui génère un surcoût de fabrication significatif car les cellules à haut rendement sont très coûteuses. Ce genre de structure et les panneaux qu'elle comporte sont généralement dimensionnés par des efforts multidirectionnels apparaissant en phase de lancement du satellite, et plus particulièrement, par les différents modes vibratoires que génère cette phase. On trouve généralement dans ces structures des colonnes de gerbage qui traversent de part en part l'empilement de panneaux selon une direction normale aux plans des panneaux, et qui sont destinées à maintenir les panneaux en appui les uns sur les autres pour mieux reprendre les efforts mécaniques de la phase de lancement. Ces colonnes de gerbage sont constituées de plusieurs douilles creuses chacune solidaire d'un panneau, qui forment un conduit qui est traversé par une tige comprimant les douilles en appui les unes sur les autres. Ces colonnes de gerbage sont suffisamment éloignées des bords des panneaux pour ne pas interférer avec la cinématique de déploiement.

Avec une telle structure, l'ajout d'un panneau a pour conséquence l'augmentation de l'épaisseur de l'empilement, et du poids du générateur, ne permettant pas une amélioration satisfaisante du rapport puissance/masse du générateur.

Une telle structure est décrite dans JP 58-214500 A.

Le but de l'invention est de remédier à cet inconvénient en proposant une structure permettant de réduire le poids des panneaux.

A cet effet, l'invention a pour objet une structure de générateur solaire de satellite comprenant plusieurs panneaux solaires ayant chacun une surface plane, lesdits panneaux étant disposés en superposition dans ladite structure, ladite structure comprenant au moins une tige maintenant lesdits panneaux comprimés les uns aux autres, deux panneaux successifs étant en contact par l'intermédiaire d'appuis disposés en périphérie desdits panneaux, caractérisée en ce que des calages collés répartis sur la surface des panneaux sont disposés entre deux panneaux successifs pour améliorer le contact entre deux panneaux successifs, pour que ladite structure présente une meilleure résistance mécanique en phase de lancement dudit satellite.

Une telle construction fait qu'une partie des efforts sont repris par les panneaux eux mêmes grâce aux calages, ce qui permet par exemple de réduire l'épaisseur desdits panneaux pour augmenter leur nombre.

Selon un mode de réalisation préféré de l'invention, la superposition comprend en alternance deux panneaux semi-rigides et un panneau de rigide. Avec cet agencement, il est possible d'utiliser des panneaux rigides connus, et une des panneaux semi-rigides ayant un dimensionnement spécifique, en vue de réduire les coûts de développement et les coûts de fabrication étant donné que les panneaux semi-rigides sont moins complexes.

Selon un autre mode de réalisation particulier de l'invention la structure comprend quatre panneaux rigides et six panneaux semi-rigides. Avec ce dimensionnement, le générateur solaire a une puissance importante tout en ayant un encombrement réduit.

L'invention sera maintenant décrite plus en détail, et en référence aux dessins annexés qui en illustrent une forme de réalisation à titre d'exemple non limitatif.
La figure 1 est une représentation partielle en coupe de la structure de l'invention.
La figure 2 est une représentation schématique d'un panneau de la structure vu de dessus.
La figure 3 est une représentation schématique d'une variante de la structure selon l'invention déployée, comprenant dix panneaux solaires.

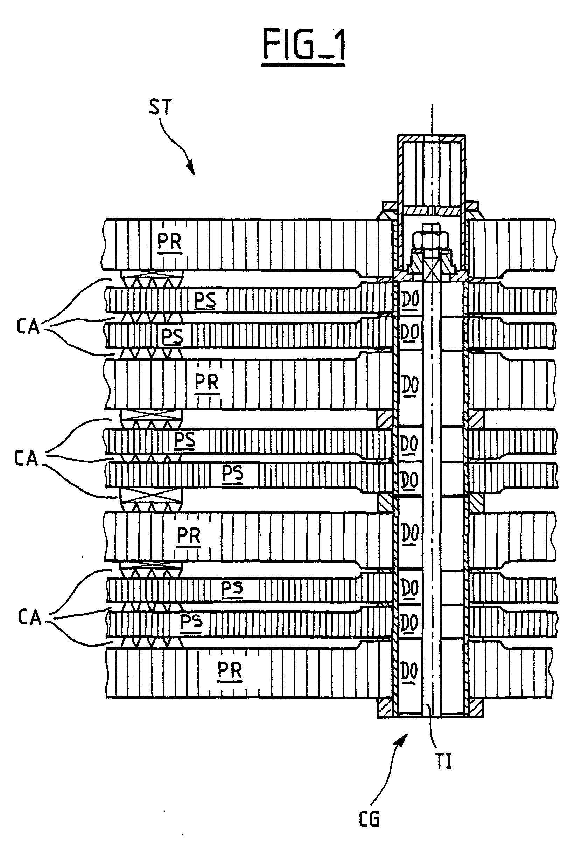

La structure selon l'invention qui a été représentée dans la figure 1 est principalement constituée d'un empilement de panneaux solaires rectangulaires formant sensiblement un parallélépipède. Cet empilement comprend plus particulièrement quatre panneaux rigides PR de forte épaisseur, entre lesquels sont intercalés deux à deux six panneaux semi-rigides PS de faible épaisseur. Ces dix panneaux sont par exemple constitués d'une structure en nid d'abeille supportant un réseau de cellules photovoltaïques, sont traversés par plusieurs colonnes de gerbage CG perpendiculairement au plan des panneaux. Ces colonnes sont destinées à maintenir les panneaux plaqués les uns aux autres pour favoriser la reprise des efforts qui sont appliqués à la structure en phase de lancement du satellite. Plus généralement, chaque colonne de gerbage CG est constituée d'une pluralité de douilles creuses DO superposées et en appui les unes sur les autres. Chaque douille est en matériau métallique ou composite et est solidaire d'un panneau correspondant. Ces douilles DO sont traversées par une tige TI qui comprime l'empilement de panneaux en prenant appui sur les douilles des panneaux supérieur et inférieur de la structure. Plus particulièrement, les panneaux sont en appui les uns par rapport aux autres au niveau des douilles creuses DO et de points d'appui non représentés dans la figure 1 qui sont disposés en périphérie de chaque panneau. Avant l'étape de déploiement du générateur solaire, cette tige TI est sectionnée par exemple par procédé pyrotechnique, de sorte que les panneaux deviennent mécaniquement libérés les uns des autres pour autoriser leur déploiement.

Dans la structure selon l'invention, des calages CA sont disposés entre les panneaux successifs tout en étant répartis sur la surface des panneaux, pour augmenter encore le couplage mécanique entre deux panneaux successifs. La structure forme alors un bloc capable de mieux reprendre les efforts apparaissant en cours de lancement. Avec l'ajout de tels calages, la rigidité des panneaux peut être réduite, ce qui contribue à améliorer le rapport puissance/masse de l'ensemble.

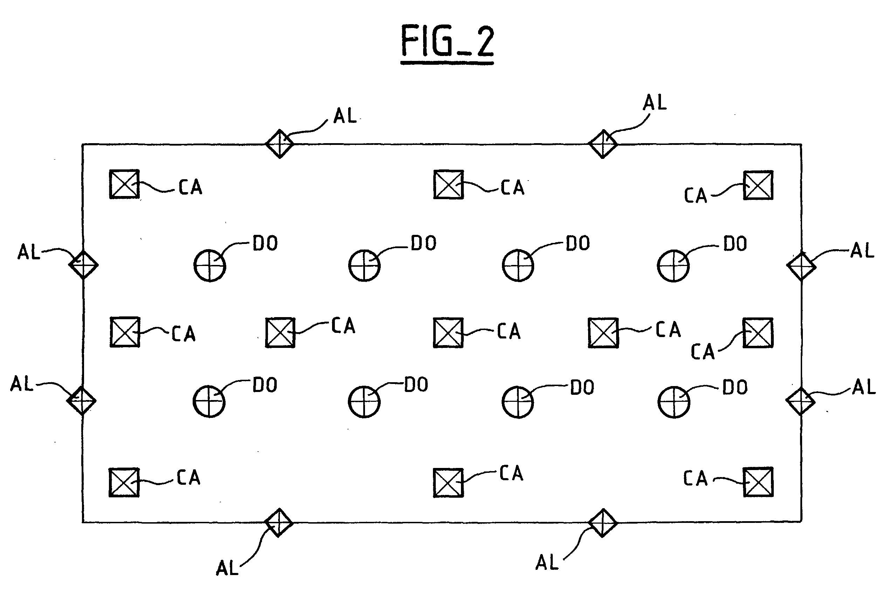

Comme visible dans la figure 2, les calages CA de la structure selon l'invention sont avantageusement répartis uniformément sur la surface des panneaux, de manière à former avec les douilles DO et avec les appuis AL une répartition homogène de points de contact sur l'ensemble de la surface de chaque panneau. Plus particulièrement, dans la figure 2, on a représenté en vue de dessus un panneau de la structure selon l'invention qui comprend huit douilles DO, et huit appuis AL, dans lequel onze calages CA viennent compléter ces différents appuis pour former un ensemble de points de contact homogènement répartis sur toute la surface du panneau. Un tel dimensionnement est donné à titre d'exemple et il va de soi que la structure selon l'invention pourra avoir un nombre différent de colonnes de gerbage, d'appuis, et de calages sans sortir du domaine de l'invention. Les calages CA de la structure selon l'invention sont collés par exemple sur la face arrière des panneaux et appuient sur une zone correspondante du panneau suivant. Ces calages sont réalisés en matériau élastique pour absorber au mieux les vibrations, et pourront être constitués de l'empilement d'une partie destinée à être collée à l'un des panneaux et d'une partie de contact destinée à appuyer sur le panneau suivant. Chaque partie de contact pourra selon le cas appuyer sur une ou plusieurs cellules ou sur une zone du panneau ne comprenant pas de cellules.

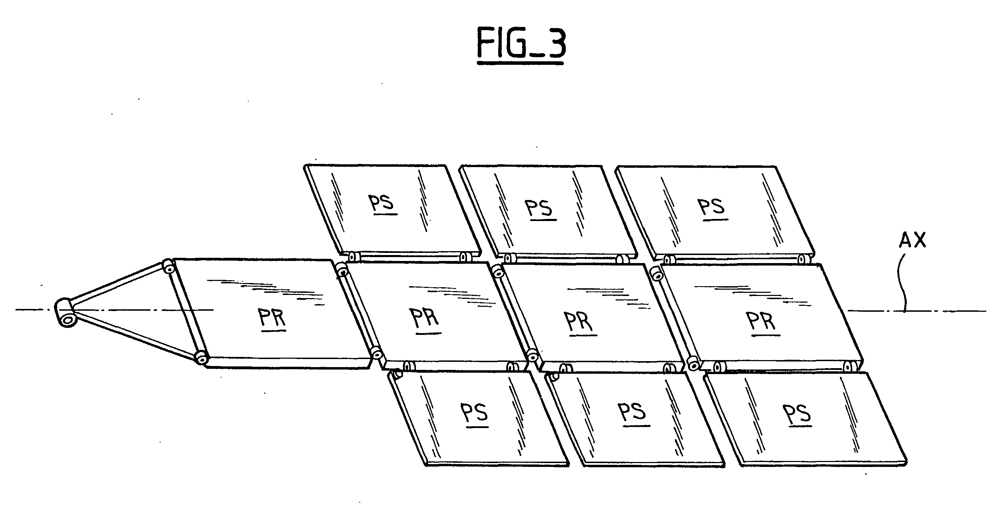

Comme visible dans la figure 3, cette structure est capable de se déployer comme les structures de l'art antérieur pour que les différents panneaux se positionnent dans un même plan. Plus particulièrement, les panneaux rigides PR qui sont solidaires les uns des autres se déplient pour s'aligner selon un axe de symétrie AX du générateur solaire. Les panneaux semi-rigides PS sont chacun lié à un panneau rigide PR, pour se déployer latéralement par rapport aux panneaux rigides PR.

En variante, les panneaux semi-rigides PS pourront être des panneaux réfléchissants, formant un angle avec les panneaux rigides PR, pour augmenter le flux lumineux perçu par les panneaux rigides. Dans cette variante, les panneaux semi-rigides PS seront par exemple revétus d'un film réfléchissant, tel que les films classiquement utilisés dans les architectures de panneaux à concentration de flux lumineux.

## Revendications

1. Structure de générateur solaire de satellite comprenant plusieurs panneaux solaires (PR, PS) ayant chacun une surface plane, lesdits panneaux étant disposés en superposition dans ladite structure (ST), ladite structure comprenant au moins une tige (TI) maintenant lesdits panneaux (PR, PS) comprimés les uns aux autres, deux panneaux successifs étant en contact par l'intermédiaire d'appuis (AL) disposés en périphérie desdits panneaux, **caractérisée en ce que** des calages (CA) sont collés répartis sur la surface des panneaux (PR, PS) et de cette manière sont disposés entre deux panneaux successifs pour améliorer le contact entre deux panneaux successifs, pour que ladite structure présente une meilleure résistance mécaniques en phase de lancement dudit satellite.

2. Structure de panneau selon la revendication 1, dans laquelle la superposition comprend en alternance deux panneaux semi-rigides (PS) et un panneau rigide (PR).

3. Structure de panneaux selon la revendication 2, comprenant quatre panneaux rigides (PR) et six panneaux semi-rigides (PS).

4. Structure de panneau selon la revendication 2 ou 3, dans laquelle lesdits panneaux semi-rigides (PS) sont des panneaux réfléchissants pour augmenter le flux lumineux perçu par les panneaux rigides (PR).

## Patentansprüche

1. Solargeneratorstruktur für Satelliten, beinhaltend mehrere Solarpanels (PR, PS), welche jeweils eine plane Oberfläche aufweisen, wobei die besagten Panels in der besagten Struktur (ST) übereinander angeordnet sind, wobei besagte Struktur mindestens eine Schraube (TI) beinhaltet, welche die besagten Panels (PR, PS) zusammengedrückt hält, und wobei zwei aufeinanderfolgende Panels über Auflager (AL), die am Rand der besagten Panels angeordnet sind, in Berührung stehen, **dadurch gekennzeichnet, daß** Verstrebungselemente (CA) geklebt, über die Oberfläche der Panels (PR, PS) verteilt und so zwischen zwei aufeinanderfolgenden Panels angeordnet sind, daß der Kontakt zwischen zwei aufeinanderfolgenden Panels verbessert wird und die besagte Struktur in der Startphase des besagten Satelliten eine höhere mechanische Beständigkeit aufweist.

2. Panelstruktur gemäß Anspruch 1, in welcher jeweils zwei halbstarre Panels (PS) und ein starres Panel (PR) abwechselnd übereinandergeschichtet sind.

3. Panelstruktur gemäß Anspruch 2, beinhaltend vier starre Panels (PR) und sechs halbstarre Panels (PS).

4. Panelstruktur gemäß einem oder beiden der Ansprüche 2 oder 3, in welcher besagte halbstarre Panels (PS) reflektierende Panels sind, um den Lichtstrom zu den starren Panels (PR) zu erhöhen.

## Claims

1. A satellite solar generator structure comprising a plurality of solar panels (PR, PS) each having a plane surface, said panels being disposed in superposition in said structure (ST), said structure including at least one rod (TI) holding said panels (PR, PS) pressed against one another, two successive panels being in contact via bearing points (AL) disposed at the peripheries of said panels, the structure being **characterized in that** spacers (CA) are stuck distributed over the surfaces of the panels (PR, PS) and in this way are disposed between two successive panels to improve contact between two successive panels so that said structure presents better mechanical strength during the launch stage of said satellite.

2. A panel structure according to claim 1, in which the superposition comprises in alternation two semi-rigid panels (PS) and one rigid panel (PR).

3. A panel structure according to claim 2, comprising four rigid panels (PR) and six semi-rigid panels (PS).

4. A panel structure according to claim 2 or claim 3, in which said semi-rigid panels (PS) are reflecting panels for increasing the light flux perceived by the rigid panels (PR).
